# FASCICULE DE BREVET EUROPEEN

(11) **EP 2 963 307 B1**
(45) Date de publication et mention de la délivrance du brevet: **10.05.2017**
(21) Numéro de dépôt: 15174714.4
(22) Date de dépôt: 01.07.2015
(51) Int. Cl.: F16C 33/46, F16C 19/36, F16C 43/08

(54) **CAGE DE RÉTENTION DE CORPS ROULANTS DANS UN PALIER À ROULEMENT**
RÜCKHALTEKÄFIG VON ROLLKÖRPERN IN EINEM WÄLZLAGER
CAGE FOR RETAINING ROLLING BODIES IN A ROLLER BEARING

(30) Priorité: 02.07.2014 FR 1456347
(43) Date de publication de la demande: 06.01.2016
(73) Titulaire: NTN-SNR Roulements, 74000 Annecy (FR)
(72) Inventeur: MAILLE, Renaud, 74000 Annecy (FR); POURROY-SOLARI, Vincent, 74230 Thones (FR)
(74) Mandataire: Sayettat, Julien Christian

(56) Documents cités:
- EP-A2- 1 757 823
- DE-A1- 4 206 861
- DE-A1-102010 035 797
- FR-A- 1 145 720
- JP-A- 2007 057 045
- JP-B- S4 941 233
- US-A- 1 356 790
- US-A- 2 267 863
- US-A- 3 075 278
- US-A- 3 975 066

## Description

L'invention concerne une cage de rétention de corps roulants dans un palier à roulement, ainsi qu'un tel palier comprenant une bague extérieure et une bague intérieure pourvues chacune d'une piste annulaire de roulement entre lesquelles des corps roulants sont retenus au moyen d'une telle cage de sorte à permettre la rotation relative desdites bagues autour d'un axe.

On connaît de nombreuses géométries de cages, notamment obtenues par emboutissage d'une tôle métallique ou par moulage d'une matière thermoplastique, présentant deux couronnes espacées axialement et entre lesquelles s'étend une pluralité de ponts de sorte à former entre deux ponts adjacents et un segment de chacune desdites couronnes un cadre périphérique sur lequel un corps roulant est retenu en pouvant tourner autour de son axe propre.

Dans certaines applications, le palier présente une géométrie qui nécessite une déformation de la cage afin de pouvoir disposer les corps roulants sur les cadres périphériques dans l'espace de roulement. Toutefois le manque d'élasticité de certains types de cage induit un risque d'amorce de rupture de ladite cage lors de son montage, risque d'autant plus important que la cage est massive pour mieux résister aux contraintes mécaniques subies lors de l'utilisation du palier. En particulier, pour les paliers à roulement de type conique dit inversé dans lequel un collet est formé sur un côté de la piste de roulement conique de la bague extérieure, il est souhaitable de déformer élastiquement la cage pour pouvoir monter les rouleaux coniques sur les cadres périphériques après disposition desdits rouleaux à l'intérieur de ladite piste de roulement extérieure.

L'invention vise à perfectionner l'art antérieur en proposant notamment une cage de rétention offrant un bon compromis entre poids, élasticité et résistance mécanique, en particulier pour faciliter l'assemblage d'un palier à roulement conique dont la bague extérieure est équipée d'un collet. Des exemples de cages pour paliers à roulement de type conique et correspondant au préambule de la revendication 1 sont montrés dans les documents FR1145720A, DE4206861A1 et JP2007057045A. A cet effet, selon un premier aspect, l'invention propose une cage de rétention de corps roulants dans un palier à roulement suivant la revendication 1.

Selon un deuxième aspect, l'invention propose un palier à roulement comprenant une bague extérieure et une bague intérieure pourvues chacune d'une piste annulaire de roulement entre lesquelles sont disposés des corps roulants de sorte à permettre la rotation relative desdites bagues autour d'un axe, chaque corps roulant étant retenu sur un cadre périphérique d'une telle cage de rétention. D'autres objets et avantages de l'invention apparaîtront dans la description qui suit, faite en référence aux figures jointes, dans lesquelles :
- la figure 1 est une représentation partielle en perspective d'un palier à roulement selon un mode de réalisation de l'invention ;
- les figures 2a et 2b sont des représentations partielles en coupe longitudinale d'un palier à roulement selon l'invention, respectivement au niveau d'une portée centrale intérieure d'un segment (figure 2a) et au niveau d'un pont (figure 2b) ;
- les figures 3 sont des représentations d'une cage de rétention selon un mode de réalisation de l'invention, respectivement en perspective (figure 3a) et en vue avant (figure 3b) ;
- les figures 4a et 4b sont des vues partielles agrandies montrant une cage de rétention selon l'invention en perspective selon deux orientations différentes.

En relation avec ces figures, on décrit ci-dessous un palier à roulement comprenant une bague extérieure 1 et une bague intérieure 2 qui sont pourvues chacune d'une piste annulaire 1a, 2a de roulement, lesdites pistes étant espacées entre elles pour former un espace de roulement dans lequel sont disposés des corps roulants 3 pour permettre la rotation relative desdites bagues autour d'un axe.

Dans la description, les termes « extérieur » et « intérieur » sont définis par rapport à l'axe de rotation du palier, respectivement pour une localisation éloignée et proche dudit axe. Les termes « axial » et « radial » sont également définis par rapport à l'axe, respectivement pour une direction suivant cet axe et s'éloignant ou se rapprochant de lui.

Le palier comprend une cage de rétention qui est agencée pour assurer, notamment lors de la rotation du palier, le maintien des corps roulants 3 dans l'espace de roulement, en permettant la rotation desdits corps sur les pistes de roulement 1a, 2a, et ce en empêchant tout contact entre lesdits corps roulants afin de ne pas contraindre leur rotation respective.

Pour ce faire, la cage de rétention présente une couronne extérieure 4 et une couronne intérieure 5 espacées axialement, ainsi qu'une pluralité de ponts 6 répartis circonférentiellement en s'étendant axialement entre lesdites couronnes de sorte à former, de part et d'autre de chaque pont 6, un cadre périphérique 7 sur lequel un corps roulant 3 est retenu en pouvant tourner autour de son axe propre Y.

En particulier, chaque cadre périphérique 7 est délimité circonférentiellement par deux ponts 6 adjacents et axialement par un segment 4a, 5a de chacune des couronnes 4, 5 qui s'étend entre les extrémités desdits ponts pour permettre la rétention d'un corps roulant 3 sur ledit cadre par interaction géométrique.

La géométrie des cadres 7 peut être agencée pour pouvoir disposer les corps roulants 3 en appui circonférentiel de part et d'autre sur respectivement une face latérale d'un pont 6, les faces latérales pouvant présenter un profil de géométrie complémentaire à celle de la périphérie desdits corps roulants pour faciliter leur roulement sur lesdites faces.

En outre, chaque segment 4a, 5a comprend une face interne qui est disposée en regard axial de la périphérie d'un corps roulant 3, lesdites faces internes pouvant présenter un profil de géométrie complémentaire à celle de la périphérie dudit corps roulant pour faciliter le roulement dudit corps roulant sur elles.

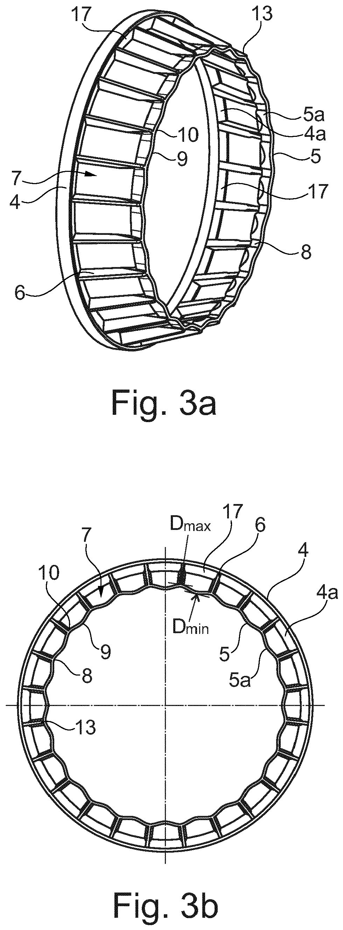

La couronne intérieure 5 est formée d'une succession de segments 5a qui sont reliés circonférentiellement par un bord commun 8, lesdits segments étant incurvés vers l'intérieur, notamment en présentant une forme concave qui est complémentaire à celle de la périphérie des corps roulants 3. Ainsi, comme représenté notamment sur la figure 3b, la couronne intérieure 5 présente un diamètre minimal Dₘᵢₙ qui est circonscrit par une portée centrale intérieure 9 de chacun des segments 5a et un diamètre maximal Dₘₐₓ dans lequel une portée extérieure 10 de chacun des bords 8 est inscrite.

Selon le mode de réalisation représenté, la cage est agencée pour pouvoir être montée dans un palier à roulement conique en ce que la couronne extérieure 4 est inscrite dans un diamètre qui est supérieur au diamètre maximal Dₘₐₓ de la couronne intérieure 5. En variante, les couronnes 4, 5 peuvent présenter un même diamètre maximal pour une utilisation dans un palier à roulement cylindrique.

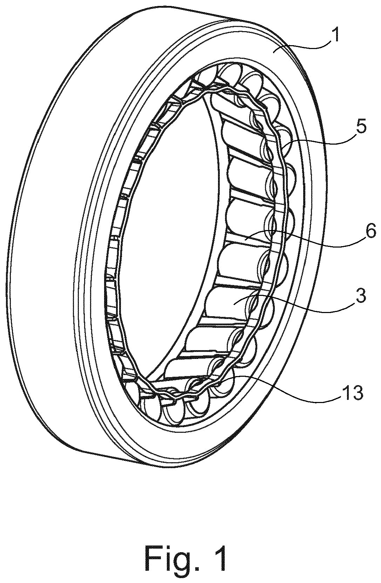

En relation avec la figure 1, chacune des pistes de roulement 1a, 2a présente une portée axiale sur laquelle les corps roulants 3 sous la forme de rouleaux coniques sont en appui par l'intermédiaire de leur périphérie tronconique, ladite portée axiale s'étendant entre un bord extérieur et un bord intérieur en présentant une géométrie tronconique.

Le palier à roulement est dit inversé en ce que la bague extérieure 1 est équipée d'un collet 11 sous la forme d'un épaulement annulaire de matière qui est réalisé sur le côté extérieur de ladite bague extérieure. Selon le mode de réalisation représenté, la bague intérieure 2 est dépourvue de collet, la portée axiale de la piste de roulement intérieure 1a débouchant de part et d'autre de ladite bague intérieure.

Le collet 11 permet notamment le maintien des rouleaux coniques 3 entre les pistes de roulement 1 a, 2a, notamment lorsque le palier est soumis à des charges axiales et/ou radiales. En particulier, la présence du collet 11 sur la bague extérieure 1 induit, par rapport à un collet solidaire de la bague intérieure 2, une vitesse de glissement dudit collet qui est réduite, une meilleure lubrification grâce à la centrifugation sur le collet 11 et un risque de grippage repoussé.

Le collet 11 présente une portée radiale 12 de roulement sur laquelle les rouleaux coniques 3 sont en appui par l'intermédiaire d'une face latérale, ladite portée radiale s'étendant entre un bord extérieur et un bord intérieur en présentant une géométrie tronconique, lesdits bords étant annulaires et le diamètre dudit bord extérieur étant supérieur au diamètre dudit bord intérieur.

Dans le mode de réalisation représenté, les cadres périphériques 7 de la cage sont disposés à l'intérieur d'un cône ayant les axes Y des rouleaux 3 comme génératrice. Ainsi, les rouleaux 3 sont maintenus en appui radial vers l'intérieur sur les cadres périphériques 7, les segments 4a, 5a de chaque couronne 4, 5 étant disposés en regard axial de respectivement une face latérale d'un rouleau 3.

Les ponts 6 présentent chacun une extrémité intérieure 13 qui est disposée sur une portée extérieure 10 respective en formant une jonction entre lesdits ponts et la couronne intérieure 5. Ainsi, en combinaison avec l'incurvation intérieure des segments 5a, la jonction des ponts 6 sur l'extérieur des bords 8 permet de conférer à la cage une élasticité autorisant sa déformation réversible au moins au niveau de sa couronne intérieure 5 en vue de permettre ou de faciliter le montage de ladite cage, notamment lors de la disposition des corps roulants 3 sur les cadres périphériques 7.

En outre, une telle déformation peut permettre de fiabiliser le fonctionnement du palier en limitant les contraintes sur la cage, notamment celles dues à des vitesses de rotation différentes des corps roulants 3, aux chocs et/ou aux vibrations desdits corps roulants sur ladite cage.

En particulier, la couronne intérieure 5 peut être déformable élastiquement entre un état de fonctionnement dans lequel les corps roulants 3 sont maintenus sur dans les cadres périphériques 7 pour leur mise en rotation sur les pistes de roulement 1a, 2a et un état déformé dans lequel la dimension de la cage, notamment au niveau de ladite couronne intérieure, est augmenté ou réduit, pour favoriser le montage de ladite cage et/ou fiabiliser la retenue et la rotation desdits corps roulants en fonctionnement.

Dans le mode de réalisation représenté, la cage est formée d'une seule pièce, par exemple par moulage d'un matériau polymère, notamment thermoplastique éventuellement chargé, favorisant sa déformation élastique sans perte de résistance mécanique.

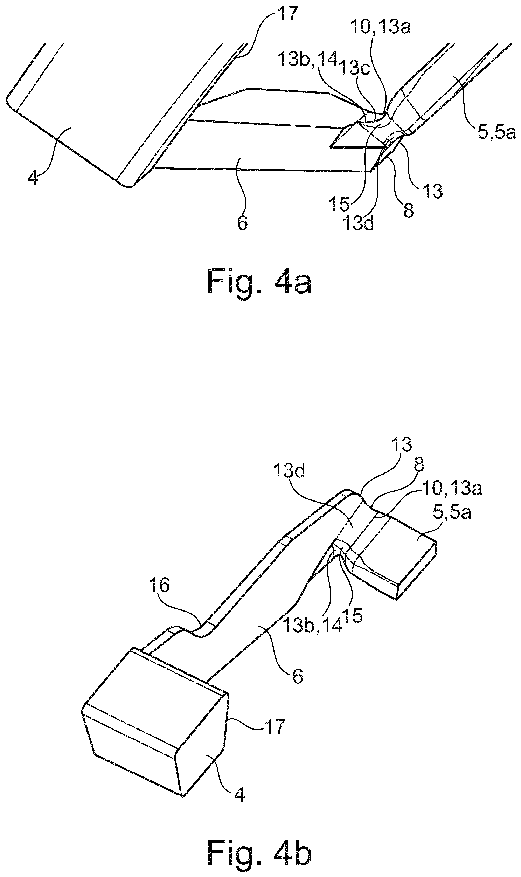

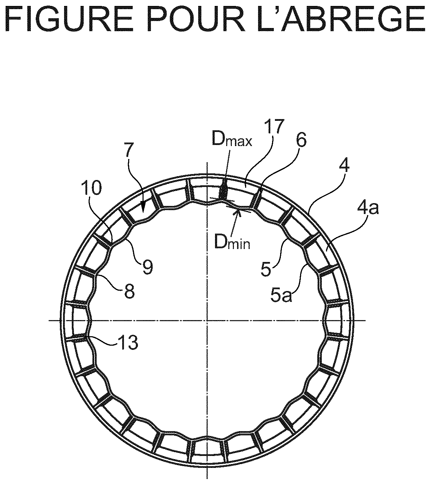

En particulier, en relation avec les figures 4, chacune des extrémités intérieures 13 des ponts 6 présente :
- une portée intérieure 13a qui est venue de matière avec la portée extérieure 10 du bord 8 correspondant pour former une jonction radiale ; et
- une portée radiale 13b qui est venue de matière avec une portée radiale 14 du bord 8 correspondant pour former une jonction axiale.

Par ailleurs, chacune des extrémités intérieures 13 des ponts 6 présente deux faces latérales 13c, 13d, la jonction formant un rayon de raccordement entre chacune desdites faces latérales et respectivement la portée extérieure 10 et la portée radiale 14 des bords 8.

Les rayons de raccordement sont notamment adaptés pour que la jonction forme une articulation, principalement en réduisant la rigidité au niveau des extrémités intérieures 13 des ponts 6 et des bords 8, facilitant ainsi un déplacement des segments 5a par rapport auxdits ponts. En outre, les rayons de raccordement permettent de diminuer les risques d'amorce de rupture, par exemple lors des chocs des corps roulants 3 sur les ponts 6 en fonctionnement.

De façon avantageuse, le rayon de raccordement avec la portée radiale 14 est formé dans un amincissement 15 afin de faciliter une déformation des segments 5a par rapport aux ponts 6. Par ailleurs, les ponts 6 présentent un bord extérieur qui présente une échancrure longitudinale 16 d'assouplissement en flexion desdits ponts.

La couronne extérieure 4 présente une paroi annulaire 17 à laquelle les extrémités extérieures des ponts 6 sont reliées. Afin de rigidifier la cage au niveau de la couronne extérieure 4, et ainsi favoriser sa résistance mécanique et donc la capacité de charge du palier, la paroi 17 s'étend radialement à partir des segments extérieurs 4a et les extrémités extérieures des ponts 6 sont encastrées dans ladite paroi.

L'élasticité de la couronne intérieure 5 combinée à la rigidification de la couronne extérieure 4 permet ainsi d'obtenir une cage conciliant une élasticité satisfaisante à une bonne résistance mécanique et un poids réduit, notamment en améliorant les propriétés d'absorption des chocs et des vibrations des corps roulants 3.

Pour garantir un bon maintien des corps roulants 3 sur les cadres périphériques 7 tout en maximisant leur nombre dans l'espace de roulement, les ponts 6 présentent une dimension radiale qui est supérieure à leur épaisseur. En particulier, les portées radiales 13b, 14 présentent une dimension radiale qui est sensiblement la même et, pour pouvoir maintenir extérieurement les corps roulants 3 par rapport à la couronne intérieure 5, les extrémités intérieures 13 des ponts 6 sont inscrites dans un diamètre qui est supérieur au diamètre maximal Dₘₐₓ de ladite couronne. Ainsi, on améliore le guidage des corps roulants 3, notamment en évitant leur mise en travers, sans augmenter l'encombrement radial intérieur de la couronne 5 qui pourrait interagir avec la piste intérieure 2a lors de la rotation.

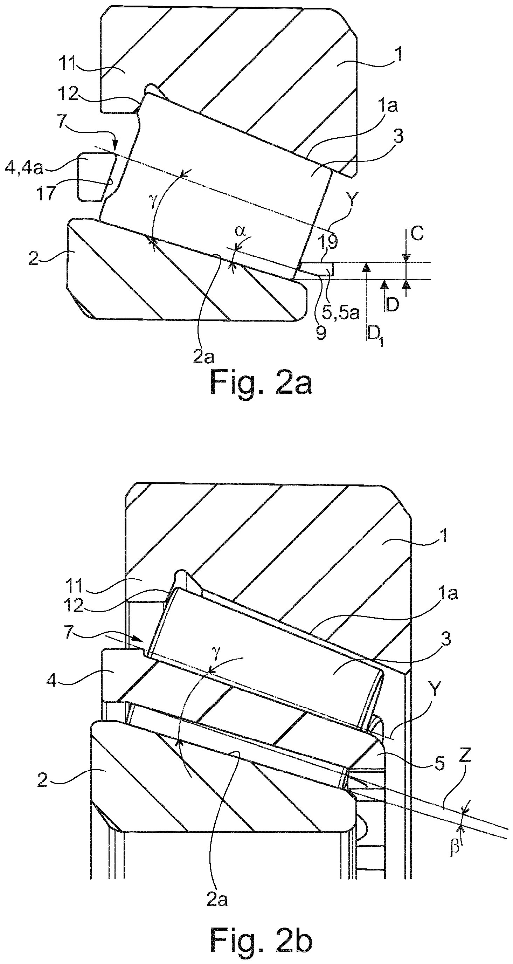

En relation avec la figure 2a, les segments 5a présentent des portées centrales extérieures 19, notamment disposées à l'opposée des portées centrales intérieures 9. En particulier, les portées centrales extérieures 19 s'étendent suivant l'axe de rotation du palier, au moins sur 80% de leur longueur.

Les portées centrales extérieures 19 sont inscrites dans un diamètre D₁ qui est séparé du diamètre D du bord intérieur de la portée axiale de la piste de roulement intérieur 2a d'une cote C qui est telle que C ≥ 1% D, notamment en étant telle que C ≥ 5% D. Par ailleurs, les portées centrales intérieures 9 des segments 5a forment un angle α qui est tel que α ≥ γ/6, γ étant l'angle formé entre l'axe Y des rouleaux coniques 3 et la portée axiale de la piste de roulement intérieur 2a.

En relation avec la figure 2b, le palier présente une zone Z délimitée entre la portée axiale de la piste de roulement intérieur 2a et un cône d'angle β tel que β ≥ γ/4, les ponts 6 étant disposés extérieurement par rapport à ladite zone. Ainsi, les ponts 6 n'étant pas disposés dans la zone Z, on évite les risques « d'avalement » desdits ponts par les rouleaux 3 lors de la rotation du palier.

De façon avantageuse, l'encombrement de la cage dans l'espace de roulement conique est limité en prévoyant qu'au moins 80% du volume de matière de ladite cage soient disposés à l'intérieur du cône ayant les axes Y des rouleaux comme génératrice.

Pour assembler un tel palier, en raison de la présence du collet 11 sur la bague extérieure 1, on prévoit d'abord de disposer les rouleaux 3 à l'intérieur de la piste de roulement 1a de ladite bague extérieure avant le montage de la bague intérieure 2, ladite bague intérieure étant ensuite montée dans ladite bague extérieure en disposant lesdits rouleaux sur la piste de roulement intérieure 2a.

Après disposition des rouleaux 3 à l'intérieur de la piste de roulement extérieure 1a, chaque rouleau 3 est disposé sur un cadre périphérique 7 afin de pouvoir bénéficier d'un ensemble bague extérieure 1 / rouleaux 3 / cage de rétention dont la cohésion est suffisante pour être manipulé avant et/ou pendant le montage de la bague intérieure 2.

La déformation de la cage de rétention permet de disposer chaque rouleau 3 sur un cadre périphérique 7 par translation axiale relative de la cage par rapport à la bague extérieure 1. En effet, la couronne intérieure 5 est déformable depuis une configuration permettant le passage de ladite couronne sous les rouleaux 3 et la disposition desdits rouleaux sur les cadres périphériques 7, vers une configuration permettant la retenue desdits rouleaux sur lesdits cadres périphériques.

En particulier, lors de la translation de la cage, la couronne intérieure 5 peut être déformée par appui sur les rouleaux 3, ladite couronne présentant un état contraint ayant un diamètre extérieur qui est suffisamment réduit pour permettre la disposition de chaque rouleau 3 sur un cadre périphérique 7. Ensuite, la disposition des segments intérieurs 5a en regard des faces latérales des rouleaux 3 est réalisée par retour élastique de la couronne intérieure 5 après sa course d'appui afin que ladite couronne intérieure retrouve son diamètre nominal. Il en résulte un montage de la cage simplifié, tout en conservant les caractéristiques mécaniques de ladite cage.

## Revendications

1. Cage de rétention de corps roulants (3) dans un palier à roulement, ladite cage présentant une couronne extérieure (4) et une couronne intérieure (5) qui sont espacées axialement, une pluralité de ponts (6) s'étendant entre lesdites couronnes de sorte à former entre deux ponts (6) adjacents et un segment (4a, 5a) de chacune desdites couronnes un cadre périphérique (7) sur lequel un corps roulant (3) est retenu en pouvant tourner autour de son axe propre (Y), la couronne intérieure (5) étant formée d'une succession de segments (5a) qui sont reliés circonférentiellement par un bord commun (8), lesdits segments étant agencés afin que ladite couronne intérieure présente un diamètre minimal (Dₘᵢₙ) qui est circonscrit par une portée centrale intérieure (9) de chacun des segments (5a) et un diamètre maximal (Dₘₐₓ) dans lequel une portée extérieure (10) de chacun des bords (8) est inscrite, les ponts (6) présentant chacun une extrémité intérieure (13) qui est disposée sur la portée extérieure (10) respective en formant une jonction entre lesdits ponts et ladite couronne intérieure, ladite cage étant **caractérisée en ce que** lesdits segments (5a) sont incurvés vers l'intérieur.

2. Cage de rétention selon la revendication 1, **caractérisée en ce que** les extrémités intérieures (13) des ponts (6) présentent une portée intérieure (13a) qui est venue de matière avec la portée extérieure (10) du bord (8) pour former une jonction radiale.

3. Cage de rétention selon l'une revendications 1 ou 2, **caractérisée en ce que** les extrémités intérieures (13) des ponts (6) présentent deux faces latérales (13c, 13d), la jonction formant un rayon de raccordement entre chacune desdites faces latérales et la portée extérieure (10) des bords (8).

4. Cage de rétention selon l'une quelconque des revendications 1 à 3, **caractérisé en ce que** les extrémités intérieures (13) des ponts (6) présentent une portée radiale (13b) qui est venue de matière avec une portée radiale (14) du bord (8) pour former une jonction axiale.

5. Cage de rétention selon la revendication 4, **caractérisée en ce que** les portées radiales (13b, 14) présentent une dimension radiale qui est sensiblement la même.

6. Cage de rétention selon l'une des revendications 4 ou 5, **caractérisée en ce que** les extrémités intérieures (13) des ponts (6) présentent deux faces latérales (13c, 13d), la jonction formant un rayon de raccordement entre chacune desdites faces latérales et la portée radiale (14) des bords (8).

7. Cage de rétention selon la revendication 6, **caractérisée en ce que** le rayon de raccordement est formé dans un amincissement (15) afin de faciliter une déformation des segments (5a) par rapport aux ponts (6).

8. Cage de rétention selon l'une quelconque des revendications 1 à 7, **caractérisée en ce que** les extrémités intérieures (13) des ponts (6) sont inscrites dans un diamètre qui est supérieur au diamètre maximal (Dₘₐₓ) de la couronne intérieure (5).

9. Cage de rétention selon l'une quelconque des revendications 1 à 8, **caractérisée en ce que** les ponts (6) présentent une dimension radiale qui est supérieure à leur épaisseur.

10. Cage de rétention selon l'une quelconque des revendications 1 à 9, **caractérisée en ce que** les ponts (6) présentent un bord extérieur qui présente une échancrure longitudinale (16) d'assouplissement en flexion desdits ponts.

11. Cage de rétention selon l'une quelconque des revendications 1 à 10, **caractérisée en ce que** la couronne extérieure (4) présente une paroi (17) à laquelle les extrémités extérieures des ponts (6) sont reliées.

12. Cage de rétention selon la revendication 11, **caractérisée en ce que** la paroi (17) s'étend radialement, les extrémités extérieures des ponts (6) étant encastrées dans ladite paroi.

13. Cage de rétention selon l'une quelconque des revendications 1 à 12, **caractérisée en ce que** la couronne extérieure (4) est inscrite dans un diamètre qui est supérieur au diamètre maximal (Dₘₐₓ) de la couronne intérieure (5).

14. Palier à roulement comprenant une bague extérieure (1) et une bague intérieure (2) pourvues chacune d'une piste annulaire (1 a, 2a) de roulement entre lesquelles sont disposés des corps roulants (3) de sorte à permettre la rotation relative desdites bagues autour d'un axe, chaque corps roulant (3) étant retenu sur un cadre périphérique (7) d'une cage de rétention selon l'une quelconque de revendications 1 à 13.

15. Palier à roulement selon la revendication 14, **caractérisé en ce que** les corps roulants (3) sont des rouleaux coniques, chacune des pistes de roulement (1a, 2a) présentant une portée axiale sur laquelle les rouleaux coniques sont en appui par l'intermédiaire de leur périphérie tronconique, lesdites portées axiales s'étendant chacune entre un bord extérieur et un bord intérieur en présentant une géométrie tronconique, la bague extérieure (1) étant équipée d'un collet (11) présentant une portée radiale (12) de roulement sur laquelle les rouleaux coniques (3) sont en appui par l'intermédiaire d'une face latérale.

16. Palier à roulement selon la revendication 15, **caractérisé en ce que** les segments (5a) présentent des portées centrales extérieures (19) qui sont inscrites dans un diamètre (D₁) qui est séparé du diamètre D du bord intérieur de la portée axiale de la piste de roulement intérieur (2a) d'une cote C qui est telle que C ≥ 1% D, notamment en étant telle que C ≥ 5% D.

17. Palier à roulement selon l'une des revendications 15 ou 16, **caractérisé en ce que** les portées centrales intérieures (9) des segments (5a) forment un angle α qui est tel que α ≥ γ/6, γ étant l'angle formé entre l'axe (Y) des rouleaux coniques (3) et la portée axiale de la piste de roulement intérieur (2a).

18. Palier à roulement selon l'une quelconque des revendications 15 à 17, **caractérisé en ce qu'**il présente une zone (Z) délimitée entre la portée axiale de la piste de roulement intérieur (2a) et un cône d'angle β tel que β ≥ γ/4, γ étant l'angle formé entre l'axe (Y) des rouleaux coniques (3) et ladite portée axiale, les ponts (6) étant disposés extérieurement par rapport à ladite zone.

## Patentansprüche

1. Kugelkäfig für Rollkörper (3) in einem Wälzlager, wobei der besagte Käfig einen äußeren Kranz (4) und einen inneren Kranz (5) aufweist, die axial in einem Abstand angeordnet sind, wobei sich eine Vielzahl von Brücken (6) zwischen den besagten Kränzen erstrecken, um zwischen zwei angrenzenden Brücken (6) und einem Segment (4a, 5a) eines jeden der besagten Kränze einen umlaufenden Rahmen (7) zu bilden, auf dem ein Rollkörper (3) zurückgehalten wird, sich um seine eigene Achse (Y) drehen kann, wobei der innere Kranz (5) aus einer Aufeinanderfolge von Segmenten (5a) gebildet wird, die im Umfang durch einen gemeinsamen Rand (8) verbunden sind, wobei die besagten Segmente angeordnet sind, damit der besagte innere Kranz einen Mindestdurchmesser (Dₘᵢₙ) aufweist, der durch eine zentrale innere Auflagefläche (9) eines jeden der Segmente (5a) eingegrenzt wird, und einen maximalen Durchmesser (Dₘₐₓ), in den eine äußere Auflagefläche (10) eines jeden der Ränder (8) eingeschrieben ist, wobei die Brücken (6) jeweils ein inneres Ende (13) aufweisen, das auf der jeweiligen äußeren Auflagefläche (10) angeordnet ist, indem es eine Nahtstelle zwischen den besagten Brücken und dem besagten inneren Kranz bildet, wobei der besagte Käfig **dadurch gekennzeichnet ist, dass** die besagten Segmente (5a) nach innen gebogen sind.

2. Kugelkäfig nach Anspruch 1, **dadurch gekennzeichnet, dass** die inneren Enden (13) der Brücken (6) eine innere Auflagefläche (13a) aufweisen, die in einem Stück mit der äußeren Auflagefläche (10) des Randes (8) gebildet wird, um eine radiale Nahtstelle zu bilden.

3. Kugelkäfig nach einem der Ansprüche 1 oder 2, **dadurch gekennzeichnet, dass** die inneren Enden (13) der Brücken (6) zwei Seitenflächen (13c, 13d) aufweisen, wobei die Nahtstelle einen Verbindungsradius zwischen jeder der besagten Seitenflächen und der äußeren Auflagefläche (10) der Ränder (8) bildet.

4. Kugelkäfig nach einem der Ansprüche 1 bis 3, **dadurch gekennzeichnet, dass** die inneren Enden (13) der Brücken (6) eine radiale Auflagefläche (13b) aufweisen, die in einem Stück mit einer radialen Auflagefläche (14) des Randes (8) gebildet wird, um eine axiale Nahtstelle zu bilden.

5. Kugelkäfig nach Anspruch 4, **dadurch gekennzeichnet, dass** die radialen Auflageflächen (13b, 14) eine radiale Abmessung aufweisen, die im Wesentlichen dieselbe ist.

6. Kugelkäfig nach einem der Ansprüche 4 oder 5, **dadurch gekennzeichnet, dass** die inneren Enden (13) der Brücken (6) zwei Seitenflächen (13c, 13d) aufweisen, wobei die Nahtstelle einen Verbindungsradius zwischen jeder der besagten Seitenflächen und der radialen Auflagefläche (14) der Ränder (8) bildet.

7. Kugelkäfig nach Anspruch 6, **dadurch gekennzeichnet, dass** der Verbindungsradius in einer Ausdünnung (15) gebildet wird, um eine Verformung der Segmente (5a) im Verhältnis zu den Brücken (6) zu erleichtern.

8. Kugelkäfig nach einem der Ansprüche 1 bis 7, **dadurch gekennzeichnet, dass** die inneren Enden (13) der Brücken (6) in einen Durchmesser eingeschrieben sind, der größer ist, als der maximale Durchmesser (Dₘₐₓ) des inneren Kranzes (5).

9. Kugelkäfig nach einem der Ansprüche 1 bis 8, **dadurch gekennzeichnet, dass** die Brücken (6) eine radiale Abmessung aufweisen, die größer ist, als deren Dicke.

10. Kugelkäfig nach einem der Ansprüche 1 bis 9, **dadurch gekennzeichnet, dass** die Brücken (6) einen äußeren Rand aufweisen, der eine Längseinkerbung (16) aufweist, welche die Biegung der besagten Brücken geschmeidiger macht.

11. Kugelkäfig nach einem der Ansprüche 1 bis 10, **dadurch gekennzeichnet, dass** der äußere Kranz (4) eine Wand (17) aufweist, mit der die äußeren Enden der Brücken (6) verbunden sind.

12. Kugelkäfig nach Anspruch 11, **dadurch gekennzeichnet, dass** sich die Wand (17) radial erstreckt, wobei die äußeren Enden der Brücken (6) in der besagten Wand eingelassen sind.

13. Kugelkäfig nach einem der Ansprüche 1 bis 12, **dadurch gekennzeichnet, dass** der äußere Kranz (14) in einen Durchmesser eingeschrieben ist, der größer ist, als der maximale Durchmesser (Dₘₐₓ) des inneren Kranzes (5).

14. Wälzlager, einen äußeren Ring (1) und einen inneren Ring (2) umfassend, die jeweils mit einer ringförmigen Laufbahn (1a, 2a) versehen sind, zwischen denen Rollkörper (3) angeordnet sind, um die Drehung der besagten Ringe zueinander um eine Achse zu ermöglichen, wobei jeder Rollkörper (3) auf einem umlaufenden Rahmen (7) eines Kugelkäfigs nach einem der Ansprüche 1 bis 13 zurückgehalten wird.

15. Wälzlager nach Anspruch 14, **dadurch gekennzeichnet, dass** die Rollkörper (3) Kegelrollen sind, wobei jede der Laufbahnen (1a, 2a) eine axiale Auflagefläche aufweist, an der die Kegelrollen über ihre kegelstumpfförmige Peripherie anliegen, wobei sich die besagten axialen Auflageflächen jeweils zwischen einem äußeren Rand und einem inneren Rand erstrecken, und eine kegelstumpfförmige Geometrie aufweisen, wobei der äußere Ring (1) mit einer Manschette (11) ausgestattet ist, die eine radiale Rollauflagefläche (12) aufweist, an der die Kegelrollen (3) über eine Seitenfläche anliegen.

16. Wälzlager nach Anspruch 15, **dadurch gekennzeichnet, dass** die Segmente (5a) äußere zentrale Auflageflächen (19) aufweisen, die in einen Durchmesser (D₁) eingeschrieben sind, der vom Durchmesser D des inneren Randes der axialen Auflagefläche der inneren Laufbahn (2a) um ein Maß C getrennt ist, das dergestalt ist, dass C ≥ 1% D ist, vor allem C≥ 5% D ist.

17. Wälzlager nach einem der Ansprüche 15 oder 16, **dadurch gekennzeichnet, dass** die inneren zentralen Auflageflächen (9) der Segmente (5a) einen Winkel α bilden, der dergestalt ist, dass α ≥ γ/6 ist, wobei γ der Winkel ist, der zwischen der Achse (Y) der Kegelrollen (3) und der axialen Auflagefläche der inneren Laufbahn (2a) eingeschlagen wird.

18. Wälzlager nach einem der Ansprüche 15 bis 17, **dadurch gekennzeichnet, dass** es eine Zone (Z) aufweist, die zwischen der axialen Auflagefläche der inneren Laufbahn (2a) und einem Konus mit dem Winkel β, mit β ≥ γ/4, eingegrenzt wird, wobei γ der Winkel ist, der zwischen der Achse (Y) der Kegelrollen (3) und der axialen Auflagefläche eingeschlagen wird, wobei die Brücken (6) außerhalb der besagten Zone angeordnet sind.

## Claims

1. Cage for holding rolling bodies (3) in a rolling bearing, said cage having an outer ring (4) and an inner ring (5) that are spaced apart axially, a plurality of bridges (6) extending between said rings so as to form between two adjacent bridges (6) and a segment (4a, 5a) of each of said rings a peripheral frame (7) on which a rolling body (3) is held while being able to turn about its own axis (Y), the inner ring (5) being formed by a succession of segments (5a) that are connected circumferentially by a common edge (8), said segments being arranged so that said inner ring has a minimum diameter (Dₘᵢₙ) that is circumscribed by an inner central span (9) of each of the segments (5a) and a maximum diameter (Dₘₐₓ) in which an outer span (10) of each of the edges (8) is inscribed, the bridges (6) each having an inner end (13) that is disposed on the respective outer span (10) while forming a junction between said bridges and said inner ring, said cage being **characterised in that** said segments (5a) are curved towards the inside.

2. Holding cage according to claim 1, **characterised in that** the inner ends (13) of the bridges (6) have an inner span (13a) that is made in one piece with the outer span (10) of the edge (8) in order to form a radial junction.

3. Holding cage according to either claim 1 or claim 2, **characterised in that** the inner ends (13) of the bridges (6) have two lateral faces (13c, 13d), the junction forming a connecting radius between each of said lateral faces and the outer span (10) of the edges (8).

4. Holding cage according to any of claims 1 to 3, **characterised in that** the inner ends (13) of the bridges (6) have a radial span (13b) that is made in one piece with a radial span (14) of the edge (8) in order to form an axial junction.

5. Holding cage according to claim 4, **characterised in that** the radial spans (13b, 14) have a radial dimension that is substantially the same.

6. Holding cage according to either claim 4 or claim 5, **characterised in that** the inner ends (13) of the bridges (6) have two lateral faces (13c, 13d), the junction forming a connecting radius between each of said lateral faces and the radial span (14) of the edges (8).

7. Holding cage according to claim 6, **characterised in that** the connecting radius is formed in a thinning (15) in order to facilitate deformation of the segments (5a) with respect to the bridges (6).

8. Holding cage according to any of claims 1 to 7, **characterised in that** the inner ends (13) of the bridges (6) are inscribed in a diameter that is greater than the maximum diameter (Dₘₐₓ) of the inner ring (5).

9. Holding cage according to any of claims 1 to 8, **characterised in that** the bridges (6) have a radial dimension that is greater than their thickness.

10. Holding cage according to any of claims 1 to 9, **characterised in that** the bridges (6) have an outer edge that has a longitudinal cutout (16) for making said bridges supple under flexion.

11. Holding cage according to any of claims 1 to 10, **characterised in that** the outer ring (4) has a wall (17) to which the outer ends of the bridges (6) are connected.

12. Holding cage according to claim 11, **characterised in that** the wall (17) extends radially, the outer ends of the bridges (6) being embedded in said wall.

13. Holding cage according to any of claims 1 to 12, **characterised in that** the outer ring (4) is inscribed in a diameter that is greater than the maximum diameter (Dₘₐₓ) of the inner ring (5).

14. Rolling bearing comprising an outer race (1) and an inner race (2) each provided with an annular rolling track (1a, 2a) between which rolling bodies (3) are disposed so as to allow the relative rotation of said races about an axis, each rolling body (3) being held on a peripheral frame (7) of a holding cage according to any of claims 1 to 13.

15. Rolling bearing according to claim 14, **characterised in that** the rolling bodies (3) are conical rollers, each of the rolling tracks (1a, 2a) having an axial span on which the conical rollers are in abutment by means of their frustoconical periphery, said axial spans each extending between an outer edge and an inner edge while having a frustoconical geometry, the outer race (1) being equipped with a collar (11) having a radial rolling span (12) on which the conical rollers (3) are in abutment by means of a lateral face.

16. Rolling bearing according to claim 15, **characterised in that** the segments (5a) have outer central spans (19) that are inscribed in a diameter (D₁) that is separate from the diameter D of the inner edge of the axial span of the inner rolling track (2a) with a dimension C that is such that C ≥ 1% D, in particular being such that C ≥ 5% D.

17. Rolling bearing according to either claim 15 or claim 16, **characterised in that** the inner central spans (9) of the segments (5a) form an angle α that is such that α ≥ γ/6, γ being the angle formed between the axis (Y) of the conical rollers (3) and the axial span of the inner rolling track (2a).

18. Rolling bearing according to any of claims 15 to 17, **characterised in that** it has a zone (Z) delimited between the axial span of the inner rolling track (2a) and a cone of angle β such that β ≥ γ/4, γ being the angle formed between the axis (Y) of the conical rollers (3) and said axial span, the bridges (6) being disposed externally with respect to said zone.
